Europäisches Patentamt

(19) European Patent Office

Office européen des brevets

(11) Veröffentlichungsnummer: **0 122 424**
**B1**

(12) # EUROPÄISCHE PATENTSCHRIFT

(45) Veröffentlichungstag der Patentschrift:
13.08.86

(51) Int. Cl.⁴: **C 25 D 13/06,** C 08 G 18/54

(21) Anmeldenummer: **84102378.1**

(22) Anmeldetag: **06.03.84**

(54) **Verfahren zur Herstellung von selbstvernetzenden kathodisch abscheidbaren ETL-Bindemitteln auf Basis modifizierter Alkylphenol-Formaldehyd-Kondensationsprodukte.**

(30) Priorität: **21.03.83 AT 974/83**

(43) Veröffentlichungstag der Anmeldung:
**24.10.84 Patentblatt 84/43**

(45) Bekanntmachung des Hinweises auf die Patenterteilung:
**13.08.86 Patentblatt 86/33**

(84) Benannte Vertragsstaaten:
**BE CH DE FR GB IT LI NL SE**

(56) Entgegenhaltungen:
**DE-A-2 759 428**
**GB-A-2 017 126**

(73) Patentinhaber: **Vianova Kunstharz Aktiengesellschaft, A-8402 Werndorf (AT)**

(72) Erfinder: **Daimer, Wolfgang, Dipl.- Ing., Rosenberggürtel 37/V/16, A-8010 Graz (AT)**
Erfinder: **Gmoser, Johann, Radegunderstrasse 30 L/II/9, A-8045 Graz (AT)**
Erfinder: **Schipfer, Rudolf, Dr., Ernst Haeckelstrasse 53, A-8010 Graz (AT)**

(74) Vertreter: **Pitter, Robert, Dr., Postfach 191 Leechgasse 21, A-8011 Graz (AT)**

## Beschreibung

Die vorliegende Erfindung betrifft ein Verfahren zur Herstellung von kathodisch abscheidbaren,selbstvernetzenden Bindemitteln für die Elektrotauchlackierung (K-ETL) auf der Basis von Alkylphenol-Formaldehyd-Kondensationsprodukten.

Aus der Literatur sind eine große Anzahl von K-ETL-Bindemitteln bekannt, wobei eine Vielzahl von Rohstoffen und Herstellungsverfahren beschrieben wird (siehe beispielsweise "Advances in Electropainting 1978 - 1980" der R.H. CHANDLER LTD, März 1981).

In der Praxis hat es sich gezeigt, daß für die Erzielung von korrosionsfesten Grundierungen nur eine relativ kleine Gruppe von Rohstoffen eingesetzt wird, wobei in erster Linie die sogenannten Epoxidharze, d. h. die Di- oder Polyglycidyläther von Bisphenolen oder Phenolnovolaken zu nennen sind.

Obwohl man auf Basis der Bisphenolglycidylätherharze kationische Bindemittel bzw. gehärtete Überzüge erhält, deren Eigenschaften den Anforderungen der Technik weitgehend entsprechen, ist es doch ein bekannter Nachteil, daß Produkte auf dieser Basis ohne entsprechende Plastifizierung nur eine mangelhafte Verformungselastizität zeigen. Das Äußert sich besonders nachteilig in einer unzureichenden Steinschlagbeständigkeit, wie sie insbesondere von der Kraftfahrzeuglackierung gefordert wird.

Der vorliegenden Erfindung liegt die Aufgabe zugrunde, selbstvernetzende, kationische Bindemittel mit einer praxisgerechten Eigenschaftskombination zugänglich zu machen. Überraschenderweise gelingt die Lösung dieser Aufgabe durch Verwendung von Alkylphenol-Formaldehyd-Kondensaten, deren alkoholische oder phenolische Hydroxylgruppen partiell oder vollständig veräthert sind, als Grundkörper. beim Aufbau der kationischen Harze. Durch diese Rohstoffbasis ist eine wesentliche Erweiterung der Möglichkeiten zur internen Plastifizierung der Bindemittel gegeben, wodurch die Elastizität der Filme wesentlich verbessert werden kann.

Bereits bekannte K-ETL-Bindemittel auf Basis von Phenol-Formaldehyd-Kondensaten,wie beispielsweise solche mit MANNICH-Basen-Struktur, konnten nicht die z. B. von der Automobilindustrie für die Grundierung von Karossen geforderten Korrosionsschutzwerte erbringen. Diese Produkte emittieren außerdem während des Härtungsvorganges relativ große Mengen schädlicher Spaltprodukte.

Aus der AT-PS 280 605 sind höhermolekulare Phenoläther bekannt, welche gegebenenfalls auch kationischen Charakter aufweisen können, wenn als Verätherungsmittel ein Aminogruppen tragendes Polyol, z. B. Diäthanolamin eingesetzt wird.

Die vorliegende Erfindung betrifft demgemäß ein Verfahren zur Herstellung von kathodisch abscheidbaren, selbstvernetzenden Bindemitteln für die Elektrotauchlackierung auf der Basis von Alkylphenol-Formaldehydkondensaten, welches dadurch gekennzeichnet ist, daß man ein durch Eigenkondensation und/oder Verätherung der alkoholischen und/oder phenolischen Hydroxylgruppen modifiziertes, durch basisch katalysierte Reaktion erhaltenes Alkylphenol-Formaldehyd-Kondensat, welches ein Molekulargewicht von mindestens 500 und eine Hydroxylzahl zwischen 100 und 700 mg KOH/g aufweist (Komponente A) gleichzeitig oder in getrennten Reaktionsstufen mit (B) Aminen, welche neben einer tertiären Aminogruppe mindestens eine Hydroxylgruppe und/oder primäre oder sekundäre Aminogruppen aufweisen und (C) aromatischen und/ oder aliphatischen und/oder cycloaliphatischen Di- oder Polyisocyanaten umsetzt, wobei die Mengenverhältnisse so gewählt werden, daß pro Mol Komponente (B) 2 bis 4 NCO-äquivalente der Komponente (C) zum Einsatz kommen und das isocyanatgruppenfreie Reaktionsprodukt eine Aminzahl zwischen 40 und 120 mg KOH/g aufweist.

Durch das erfindungsgemäße Verfahren werden Bindemittel erhalten, die frei sind von verseifbaren Estergruppen und deshalb in wäßriger Verdünnung eine überlegene Stabilität aufweisen. Durch die Abspaltung eines Teiles des Amins bei der Vernetzung wird überdies die Zahl der chemisch angreifbaren Stellen wesentlich vermindert. Als Komponente (A) werden modifizierte durch alkalische Kondensation erhaltene Alkylphenol-Formaldehyd-Kondensate (Resole) eingesetzt, welche ein durchschnittliches Molekulargewicht von mindestens 500 und eine Hydroxylzahl von 100 bis 700 mg KOH/g aufweisen. Die angegebene Hydroxylzahl umfaßt sowohl alkoholische als auch phenolische Hydroxylgruppen.

Als Alkylphenole werden im weiteren die ortho-, meta- und para-Substitutionsprodukte des Phenols mit geradkettigen oder verzweigten Alkylresten verstanden. Vertreter dieser Verbindungsklasse sind die isomeren Kresole, Xylenole, Butyl-, Amyl-, Octyl- oder Nonylphenole bzw. die Gemische dieser Isomeren. Für das erfindungsgemäße Verfahren werden die ortho- und para-Substitutionsprodukte bevorzugt. Besonders bevorzugt werden die Alkylphenole, deren Alkylrest 4 bis 10 C-Atome aufweist, wie p.tert. Butylphenol, Amylphenol, Octyl- oder Nonylphenol.

Die Anlagerung von Formaldehyd an das Alkylphenol verläuft im Sinne einer Resolbildung in Gegenwart von alkalischen Substanzen, wie Alkali-, Erdalkalihydroxiden oder (cyclo)aliphatischen tertiären Aminen bzw. quartären Ammoniumhydroxiden bei Temperaturen unter 100°C. Die Verfahren und Reaktionsmechanismen für die Herstellung dieser Kondensate sind dem Fachmann bekannt und bedürfen keiner näheren Erläuterung. Wesentlich für das erfindungsgemäße Verfahren ist die Abwesenheit von Salzresten bzw. Wasser in der Komponente (A).

Das Verhältnis von Formaldehyd zu Alkylphenol ist im allgemeinen nicht kritisch. Bevorzugt werden pro besetzungsfähiger Position 0,2 - 1,2 Mol Formaldehyd eingesetzt.

Zur Erzielung des gewünschten Molekulargewichts werden die Kondensationsprodukte entweder einer Eigenkondensation und/ oder einer partiellen oder vollständigen Verätherung mit ein- und/oder mehrwertigen Alkoholen unterworfen. Auch diese Reaktionen sind dem Fachmann bekannt.

Als Verätherungsalkohole dienen Monoalkohole mit 1 - 4 C-Atomen, insbesonders Äthanol oder Butanol. Diese Alkohole werden entweder allein, bei Vorliegen eines bereits höhermolekularen Kondensats, oder zusammen mit mehrwertigen Alkoholen eingesetzt. Als mehrwertige Alkohole dienen vorzugsweise Diole wie Äthylenglykol und seine Homologen, Neopentylglykol oder Polyalkylenglykole wie Polyäthylenglykole, Polypropylenglykole, Polytetramethylenglykole etc. Höherwertige Alkohole wie Glycerin, Trimethylolpropan, Trimethyloläthan können gegebenenfalls mitverwendet werden, wobei darauf zu achten ist, daß dadurch nicht die gewünscht Flexibilität durch einen zu komplexen Molekülaufbau beeinträchtigt wird.

Alle Verätherungs- bzw. Kondensationsreaktionen der Alkylphenol-Formaldehyd-Kondensate können unter normalem Atmosphärendruck, vorzugsweise aber unter vermindertem Druck zur sicheren Entfernung des Reaktionsnebenproduktes Wasser durchgeführt werden. Ebenso ist es eine bevorzugte Ausführungsform, die Verätherungs- bzw. Kondensationsreaktionen in Gegenwart eines azeotropen Schleppmittels, wie z. B. Xylol durchzuführen.

Eine zusätzliche Modifizierung der Komponente (A) besteht in der Umsetzung aller oder eines Teiles der phenolischen Hydroxylgruppen durch Verätherung, insbesonders mit Monoepoxidverbindungen, z. B. 2, 3-Epoxypropanol-1, Äthylenoxid, Propylenoxid oder Glycidylestern, beispielsweise von verzweigten $C_9$-$C_{11}$-Carbonsäuren.

In gleicher Weise kann die Verätherung der phenolischen Hydroxylgruppe durch Umsetzung mit Dioxolon-2 (Ethylencarbonat) bzw. 4-Methyldioxolon-2 (Propylencarbonat) bei Normaldruck unter Abspaltung von Kohlendioxid erreicht werden.

Als Komponente (B) werden (cyclo)-aliphatische Amine eingesetzt, welche, neben einer tertiären Aminogruppe, mindestens eine Hydroxylgruppe und/oder primäre oder sekundäre Aminogruppe aufweisen. Beispiele für geeignete Verbindungen sind N, N-Dimethylaminoäthanol; N, N-Diäthylaminoäthanol; 2-Dimethylamino-2-methyl-1-propanol; N, N-Diäthylpropan-1, 3-diamin; N, N-2, 2-Tetramethylpropan-1, 3-diamin; 3-Dimethylamino-2, 2-dimethylpropan-1-ol; Cyclohexyldiäthanolamin; Methyldiäthanolamin; 2-(2-Hydroxyäthoxy)-äthylamin-1; 4-(2-Hydroxyäthyl)morpholin.

Als Komponente (C) sind aromatische, cycloaliphatische oder aliphatische Diisocyanate und Polyisocyanate geeignet. Als Beispiele dienen: 1, 6-Diisocyanatohexan; 1-Isocyanato-3-isocyanato-methyl (3, 5, 5-trimethyl)-cyclohexan ( = Isophoron diisocyanat); 2, 4-Diisocyanatotoluol; 2, 6-Diisocyanatotoluol 4,-4'-Diisocyanatodiphenylmethan = MDI; bzw. die entsprechenden 2, 4'-und 2, 2'-Isomeren. Bevorzugt werden diejenigen Diisocyanate, deren NCO-Gruppen eine unterschiedliche Reaktivität aufweisen, z. B. Toluylendiisocyanat (als handelsübliches Isomerengemisch), Cyclohexylendiisocyanat oder Isophorondiisocyanat.

Die Reaktion zwischen den Partnern (A), (B) und (C) wird vorzugsweise so durchgeführt, daß (A) und (B) gegebenenfalls in Anwesenheit eines inerten Lösungsmittels gemischt und (C) langsam unter Rühren zugegeben wird. Es ist aber auch möglich, aus (B) und (C) bei Raumtemperatur unter Kühlung ein basisches Zwischenprodukt mit freien Isocyanatgruppen herzustellen und dieses anschließend bei mäßig erhöhter Temperatur mit (A) unter Verbrauch sämtlicher Isocyanatgruppen umzusetzen. Es ist weniger bevorzugt, (A) und (C) vorzumischen und anschließend (B) zuzugeben.

Die Mengenverhältnisse der Reaktionspartner werden so abgestimmt, daß das Reaktionsprodukt - bezogen auf nichtflüchtige Harzbestandteile - eine Aminzahl nach DIN 53 176 von 40 - 120 mg KOH/g hat. Pro Mol eingesetzter Komponente (B) werden 2 - 4 Mol Isocyanatgruppen in (C) angewendet. Ein allfälliger Isocyanatüberschuß dient einer Verknüpfung der Moleküle über isocyanatreaktive Gruppen der Komponente (A). Menge auf Aufbau der eingesetzten Komponente (A) wird so gewählt, daß eine sichere Bindung bzw. Verkappung aller Isocyanatgruppen, welche nicht zur Koppelung der Aminkomponente verbraucht werden, gewährleistet ist.

Die Anwesenheit eines inerten Lösungsmittels, wie z. B. Xylol oder Methylisobutylketon während der Umsetzung ist bevorzugt. Nach Abschluß der Reaktion ist eine destillative Entfernung dieses Lösungsmittels im Vakuum günstig. Es können anschließend alkoholische Lösungsmittel wie Äthanol, (Iso)-propanol oder Glyköläther wie Äthylglykol oder Butylglykol zur Senkung der Viskosität bis zu einem Feststoffgehalt von 50 - 90 % zugegeben werden.

Die weitere Verarbeitung des erfindungsgemäßen Bindemittels, wie Neutralisation mit Ameisensäure, Essigsäure oder Milchsäure, der Zusatz von Katalysatoren und Inhibitoren, die Pigmentierung sowie die Verdünnung mit Wasser zu einem kationischen Elektrotauchlackierbad erfolgt in bekannter Weise. Ebenso sind die Bedingungen für die Abscheidung und Aushärtung der Lackfilme bekannt. Die Einbrenntemperaturen für die erfindungsgemäß hergestellten Produkte liegen zwischen 150 und 200°C, vorzugsweise bei 160 - 180°C.

Die folgenden Beispiele sollen die Erfindung näher erklären, ohne ihren Umfang zu beschränken. Alle Prozent- und Mengenangaben beziehen sich, soweit nicht anders angegeben, auf Gewichtseinheiten. Alle Viskositäten sind gemäß GARDNER-HOLDT-Standard (GH) angegeben.

**Beispiel 1:**

184 g wäßrige Formaldehydlösung (36%ig) 3 g Triäthylamin und 150 g p-tert. Butylphenol werden unter Rühren langsam auf 60°C erwärmt. Nach ca. 7 Stunden Reaktionszeit ist der Gehalt an freiem Formaldehyd auf einen konstanten Endwert gefallen. Nach Kühlung auf 40°C werden 1,5 g Oxalsäure zugefügt; das nach Abstellen des Rührwerkes sich abtrennende Wasser wird abgesaugt und das Harz wird anschließend solange mit Wasser gewaschen, bis das abgetrennte Waschwasser eine elektrische Leitfähigkeit unter 1000 Mikro-Siemens/cm aufweist. Das so erhaltene Alkylphenolresol wird mit 59 g Hexandiol-1,6 und 1 g ortho-Phosphorsäure (75%ig) sowie 30 g Xylol als azeotropes Schleppmittel versetzt und auf 150°C erwärmt. Bei langsam steigender Temperatur bis 150°C werden ca. 60 g Wasser destillativ abgetrennt. Das kondensierte Alkylphenolresol wird mit Xylol auf 50 % Harzgehalt verdünnt. Es hat (auf 50 % mit Xylol verdünnt) eine Viskosität von M (GH). Der Resolharzlösung werden 117 g (1 Val) N,N-Diäthylaminoäthanol und 117 g Xylol zugegeben. Bei 60°C wird unter gutem Rühren innerhalb einer Stunde eine Mischung von 250 g Hexamethylendiisocyanat (3 Val) und 250 g Xylol gleichmäßig zugetropft.

Man erwärmt auf 120°C und hält diese Temperatur ca. 1 Stunde, wobei der Gehalt an freien NCO-Gruppen auf Null abfällt. Anschließend wird das Xylol bei 120°C mit steigendem Vakuum abdestilliert und das Harz mit Butylglykol auf 70 % Festgehalt verdünnt. Man erhält eine rötlich gefärbte Harzlösung mit einer Aminzahl von 95 mg KOH/g.

100 g Harz (entsprechend 143 g 70%iger Harzlösung) werden mit 4,3 g 85%iger Ameisensäure (0,08 Mol) neutralisiert und mit 0,5 g Dibutylzinndilaurat versetzt. Durch langsame Zugabe von 520 g Wasser unter Rühren wird eine trübe Bindemittellösung ohne Sedimentationsneigung erhalten.

Auf zinkphosphatierten Stahlblechkathoden werden bei 100 Volt aus dieser Lösung Beschichtungen durchgeführt, die anschließend abgespült und 20 Minuten bei 175°C eingebrannt werden. Man erhält glatte, harte und biegsame Überzüge.

**Beispiel 2:**

880 g p-Nonylphenol und 800 g wäßrige Formaldehydlösung (36%ig) werden vermischt und innerhalb von 2 Stunden langsam mit 160 g Natriumhydroxidlösung (40%ig) versetzt. Man läßt die Lösung bei Raumtemperatur stehen, bis der Gehalt an freiem Formaldehyd unter 3 % des Ansatzes gefallen ist. Durch Zusatz von 160 g Schwefelsäure (50 %) wird das Resolharz abgetrennt und anschließend salzfrei gewaschen. Das Resolharz wird mit 240 g Xylol versetzt und einer azeotropen Vakuumdestillation bei 45 - 50°C unterworfen, bis ca. 112 g Wasser abgetrennt sind. Die klare Harzlösung hat einen Festgehalt von 71 % und eine Viskosität von H (GH) Die Hydroxylzahl beträgt 390 mg KOH/g, der Wassergehalt 1,2 %.

1222 g der 71%igen kondensierten Resolharzlösung werden mit 546 g Xylol und 130 g N,N-Diethylpropan-1,3-diamin verrührt. Bei 60°C wird in 90 Minuten eine Lösung aus 261 g Toluylendiisocyanat (handelsübliches Isomerengemisch) in 174 g Xylol gleichmäßig zugetropft. 30 Minuten nach beendigter Zugabe ist ein Gehalt an freiem Isocyanat nicht mehr nachweisbar. Die klare orangegelbe Harzlösung hat eine Viskotität von T (GH).

Bei 60°C werden 400 g eines handelsüblichen Glycidylesters von $C_9$-$C_{11}$-Monocarbonsäuren und 50 g Polypropylenglykol (Molekulargewicht 1000) zugegeben. Die Temperatur wird auf 140°C gesteigert und gehalten, bis 55 g Wasser mit Hilfe des Schleppmittels abgetrennt wurden. Der Oxirangruppengehalt beträgt weniger als 0,1 meq/g. Anschließend werden im Vakuum bei 140°C 1010 g Teile Xylol abgezogen. Durch Zugabe von 850 g Butylglykol wird ein Festgehalt von 65 % eingestellt.

Die Verarbeitung des Harzes und die Abscheidung erfolgt wie in Beispiel 1 angegeben. Die erhaltenen Filme zeigen ausgezeichnete Eigenschaften hinsichtlich der Oberfläche, der Flexibilität und des Vernetzungsgrades. Entsprechend pigmentierte Lacke zeigen eine ausgezeichnete Korrosionsfestigkeit auch auf nichtvorbehandeltem Stahlblech. Die Zeitdauer bis zu einem Salzsprühangriff von 2 mm am Kreuzschnitt beträgt mehr als 600 Stunden.

**Patentansprüche**

1. Verfahren zur Herstellung von kathodisch abscheidbaren, selbstvernetzenden Bindemitteln für die Elektrotauchlackierung auf der Basis von Alkylphenol-Formaldehyd-Kondensaten, dadurch gekennzeichnet, daß man ein durch Eigenkondensation und/oder Verätherung der alkoholischen und/oder phenolischen Hydroxylgruppen modifiziertes, durch basisch katalysierte Reaktion erhaltenes Alkylphenol-Formaldehyd-Resol, welches ein Molekulargewicht von mindestens 500 und eine Hydroxylzahl zwischen 100 und 700 mg KOH/g aufweist (Komponente (A), gleichzeitig oder in getrennten Reaktionsstufen mit

(B) Aminen, welche neben einer tertiären Aminogruppe mindestens eine Hydroxylgruppe und/oder primäre oder sekundäre Aminogruppe aufweisen und

(C) aromatischen und/oder aliphatischen und/oder cycloaliphatischen Di- oder Polyisocyanaten umsetzt, wobei die Mengenverhältnisse so gewählt werden, daß pro Mol Komponente (B) 2 bis 4 NCO-Äquivalente der Komponente (C) zum Einsatz kommen und das isocyanatgruppenfreie Reaktionsprodukt eine Aminzahl zwischen 40 und 120 mg KOH/g aufweist.

2. Verfahren nach Anspruch 1, dadurch gekennzeichnet, daß in der Komponente (A) ortho- und/oder parasubstituierte Alkylphenole mit einem Alkylrest mit 4 bis 10 C-Atomen eingesetzt werden.

3. Verfahren nach den Ansprüchen 1 und 2, dadurch gekennzeichnet, daß zur Verätherung der alkoholischen Hydroxylgruppen des Alkylphenol-Formaldehyd-Resols Monoalkohole und/oder gegebenenfalls in untergeordneten Mengen, Polyole eingesetzt werden.

4. Verfahren nach den Ansprüchen 1 bis 3, dadurch gekennzeichnet, daß die Verätherung der phenolischen Hydroxylgruppen mit Monoepoxidverbindungen erfolgt.

5. Verfahren nach Anspruch 4, dadurch gekennzeichnet, daß zur Verätherung der phenolischen Hydroxylgruppen 2, 3-Epoxypropanol-1 und/oder Alkylenoxide und/oder Glycidylester von Monocarbonsäuren mit 6 bis 35 C-Atomen und/oder Dioxolon-2 und/oder 4-Methyldioxolon-2 eingesetzt werden.

6. Verfahren nach den Ansprüchen 1 bis 5, dadurch gekennzeichnet, daß man die Komponenten (A) und (B) gegebenenfalls in Gegenwart eines isocyanatinerten Lösungsmittels, mischt und die Komponente (C) langsam bei 60 bis 80° C unter Rühren zugibt.

7. Verfahren nach den Ansprüchen 1 bis 5, dadurch gekennzeichnet, daß man die Komponente (A) mit einem eine freie NCO-Gruppe aufweisenden Reaktionsprodukt aus den Komponenten (B) und (C), gegebenenfalls zusammen mit weiteren Anteilen der Komponente (C), umsetzt.

## Claims

1. Process for producing cathodically depositable self-crosslinking binders for electrodeposition based on alkylphenol-formaldehyde condensates, characterised in that an alkylphenol-formaldehyde resol obtained through basically catalysed reaction and modified through self-condensation and/or etherification of the alcoholic and/or phenolic hydroxy groups, having a molecular weight of at least 500 and a hydroxyl value of between 100 and 700 mg KOH/g (component (A)), is reacted simultaneously or in separate reaction steps with (B) amines which, besides a tertiary amine group, carry at least one hydroxy group and/or primary or secondary amino group and (C) with aromatic and/or aliphatic and/or cycloaliphatic di- or polyisocyanates, the weight ratios being chosen such that per mole of component (B) 2 to 4 NCO-equivalents of component (C) are employed and that the isocyanate-free reaction product has an amine value of between 40 and 120 mg KOH/g.

2. Process according to claim 1, characterised in that ortho- and/or para substituted alkyl phenols, with an alkyl radical of from 4 to 10 C-atoms are used in component (A)

3. Process according to claims 1 and 2, characterised in that monoalcohols and/or polyols, optionally in subordinate quantities, are used for the etherification of the alcoholic hydroxy groups of the alkylphenol-formaldehyde resol.

4. Process according to claims 1 to 3, characterised in that the phenolic hydroxy groups are etherified with monoepoxy compounds.

5. Process according to claim 4, characterised in that 2, 3-epoxypropanol-1 and/or alkylene oxides and/or glycidyl esters of monocarboxylic acids with 6 to 35 C-atoms and/or dioxolone-2 and/or 4-methyldioxolone-2 are used for the etherification of the phenolic hydroxy groups.

6. Process according to claims 1 to 5, characterised in that component (A) and (B) are mixed optionally in the presence of an isocyanate-inert solvent and that component (C) is slowly added at from 60 to 80° C while stirring.

7. Process according to claims 1 to 5, characterised in that component (A) is reacted with a reaction product of components (B) and (C) carrying one free isocyanate group, optionally together with further portions of component (C).

## Revendications

1. Procédé pour la préparation de liants cathodiquement déposables, autoréticulants, à base de condensats d'alcoylphénol-formaldéhyde pour la peinture électrophorétique,

caractérisé en ce que l'on fait réagir un alcoylphénol-formaldéhyde résol obtenu par réaction catalysée basiquement, modifié par autocondensation et/ou éthérification des groupes hydroxyle alcooliques et/ou phénoliques, lequel présente un poids moléculaire d'au moins 500 et un indice d'hydroxyle situé entre 100 et 700 mg de KOH/g (composant A), simultanément ou en des étapes réactionnelles séparées avec

des amines (B), lesquelles présentent en plus d'un groupe amino tertiaire, au moins un groupe hydroxyle et/ou un groupe amino primaire ou secondaire et avec

(C) des di- ou polyisocyanates aromatiques et/ou aliphatiques et/ou cycloaliphatiques,

en choisissant les rapports pondéraux de telle manière que par mole de composant (B) on met en oeuvre 2 à 4 équivalents NCO du composant (C) et que le produit de réaction exempt de groupes isocyanates, présente un indice d'amine entre 40 et 120 mg de KOH/g.

2. Procédé selon la revendication 1, caractérisé en ce que dans le composant (A) on met en oeuvre des alcoylphénols ortho et/ou parasubstitués ayant un radical alcoyle ayant 4 à 10 atomes de C.

3. Procédé selon les revendications 1 et 2, caractérisé en ce que pour l'éthérification des groupes hydroxyle alcooliques de l'alcoylphénol-formaldéhyde-résol on met en oeuvre des monoalcools et/ou, le cas échéant en quantités moindres, des polyols.

4. Procédé selon les revendications 1 à 3, caractérisé en ce que l'éthérification des groupes hydroxyle phénoliques s'effectue avec des composés monoépoxydes.

5. Procédé selon la revendication 4, caractérisé en ce que pour l'éthérification des groupes hydroxyle phénoliques, on met en oeuvre le 2,3-époxypropanol-1 et/ou des oxydes d'alcoylène et/ou des esters de glycidyle d'acides monocarboxyliques ayant 6 à 35 atomes de C et/ou la dioxolone-2 et/ou la 4-méthyldioxolone-2.

6. Procédé selon les revendications 1 à 5, caractérisé en ce que l'on mélange les composants (A) et (B) éventuellement en présence d'un solvant inerte aux isocyanates et que l'on ajoute le composant (C) lentement à une température vers 60 à 80°C sous agitation.

7. Procédé selon les revendications 1 à 5, caractérisé en ce que l'on fait réagir le composant (A) avec un produit de réaction présentant un groupe NCO libre obtenu à partir des composants (B) et (C), le cas échéant conjointement avec d'autres proportions du composant (C).